# EUROPÄISCHE PATENTSCHRIFT

(11) **EP 2 058 140 B1**
(45) Veröffentlichungstag und Bekanntmachung des Hinweises auf die Patenterteilung: **11.01.2012**
(21) Anmeldenummer: 08019301.4
(22) Anmeldetag: 04.11.2008
(51) Int. Cl.: B60B 33/02

(54) **Einradrolle und Tragteil für eine Einradrolle**
Single wheel castor and bearing part for a single wheel castor
Rouleau à une roue et élément de support pour un rouleau à une roue

(30) Priorität: 07.11.2007 DE 102007053445
(43) Veröffentlichungstag der Anmeldung: 13.05.2009
(73) Patentinhaber: Steinco Paul vom Stein GmbH, 42929 Wermelskirchen (DE)
(72) Erfinder: Weichbrodt, Tobias, 42929 Wermelskirchen (DE); Rödel, Thorsten, 42929 Wermelskirchen (DE)
(74) Vertreter: Ostriga, Sonnet, Wirths & Roche

(56) Entgegenhaltungen:
- EP-A1- 0 588 460
- DE-U1- 9 210 415
- GB-A- 838 129
- GB-A- 873 107

## Beschreibung

Die Erfindung betrifft zunächst eine Einradrolle, insbesondere für Krankenhausbetten, mit einem ein Kopfteil und ein einschenkliges Fußteil aufweisendes Tragteil, dessen Kopfteil zumindest einen Rückenbolzen und dessen Fußteil zumindest eine Nabe für ein Rad aufnimmt.

Eine derartige Einradrolle ist aus der GB 873 107 A sowie aus dem druckschriftlich nicht nachweisbaren Stand der Technik beispielsweise in Form des Produktes Serie 700 der Anmelderin bekannt (s. www.steinco.de). Die dort offenbarte, grundsätzlich vorteilhafte Rolle weist jedoch lediglich eine reibschlüssige Radfeststelleinrichtung auf, welche insbesondere im Zusammenhang mit der langen Lebensdauer von Rollen dahingehend Nachteile aufweist, dass durch den Verschleiß der Feststelleinrichtung sich Nachteile im Bremsverhalten ergeben können. Auch kann die Funktion der Radfeststelleinrichtung durch Verschmutzungen beeinträchtigt werden.

Ausgehend von diesem Stand der Technik besteht die Aufgabe der Erfindung darin, eine neue Einradrolle zu schaffen, die so ausgebildet ist, dass Möglichkeiten des Einbaus einer innenliegenden Radfeststelleinrichtung bestehen.

Die Lösung der Aufgabe ergibt sich aus den Merkmalen des Anspruchs 1, insbesondere den Merkmalen des Kennzeichenteils, wonach das Fußteil einen Hohlraum aufweist, der mit Ausnahme eines Bewegungsspaltes vom Radkörper abgedeckt wird, und wonach der Hohlraum über einen innenliegenden Funktionsbereich mit dem Kopfteil räumlich verbunden ist

einschenkligem Fußteil weitgehend geschützt gegen äußere Einflüsse, wie Verschmutzungen, eine Radfeststelleinrichtung zu integrieren. Dies bedeutet auch bei langjähriger Benutzung, dass aufgrund der Abgeschirmtheit der innenliegenden Radfeststelleinrichtung eine hohe Funktionssicherheit garantiert ist.

Bei einer Ausgestaltung der Erfindung ist der innenliegende Funktionsbereich kanalartig ausgebildet, wodurch die Stabilität des Tragteiles nicht beeinträchtigt wird.

Eine vorteilhafte Ausführungsform der Erfindung weist im Fußteil eine Radfeststelleinrichtung auf, welche über eine im innenliegenden Funktionskanal angeordnete Bremsstange mit dem Betätigungsexzenter im Kopfteil mittelbar wirkverbunden ist, wobei auf besonders vorteilhafte Weise die Radfeststelleinrichtung formschlüssig auf den Radkörper einwirken kann.

Die letztgenannte Ausführungsform hat den wesentlichen Vorteil, dass die Radfeststelleinrichtung auch während der langen Lebensdauer einer Einradrolle quasi keinem Verschleiß unterliegt und somit eine sehr hohe Funktionssicherheit aufweist.

Weitere Vorteile der Erfindung ergeben sich aus den nachfolgenden Unteransprüchen sowie der Beschreibung eines Ausführungsbeispiels. Es zeigen:
Fig. 1 eine Seitenansicht einer Einradrolle,
Fig. 2 eine gegenüberliegende Seitenansicht der Einradrolle gemäß Fig. 1,
Fig. 3 eine Rückansicht der Einradrolle gemäß den Fig. 1 und 2,
Fig. 4 eine Seitenansicht der Einradrolle gemäß Fig. 1 mit abgenommenem Laufrad,
Fig. 5 eine perspektivische Ansicht des einstückigen Kunststoffgehäuses einer Einradrolle gemäß Fig. 1,
Fig. 6 eine Schnittdarstellung durch eine Einradrolle gemäß Fig. 1 mit Feststelleinrichtung im nicht festgestellten Zustand,
Fig. 7 eine Schnittdarstellung gemäß Fig. 6 im Zustand der Radfeststellung,
Fig. 8 eine Schnittdarstellung gemäß Fig. 6 bei Rad-, Schwenk-und Richtungsfeststellung,
Fig. 9 eine Darstellung eines Betätigungsexzenters,
Fig. 10 eine Darstellung eines Schaltkopfes,
Fig. 11 eine Darstellung eines Schaltbolzens einschließlich tellerartigem Richtungs-/Schwenkfeststeller,
Fig. 12 eine Darstellung einer Betätigungsstange und
Fig. 13 eine Darstellung eines Feststellhebels.

In den Zeichnungen ist eine Einradrolle insgesamt mit der Bezugsziffer 10 bezeichnet.

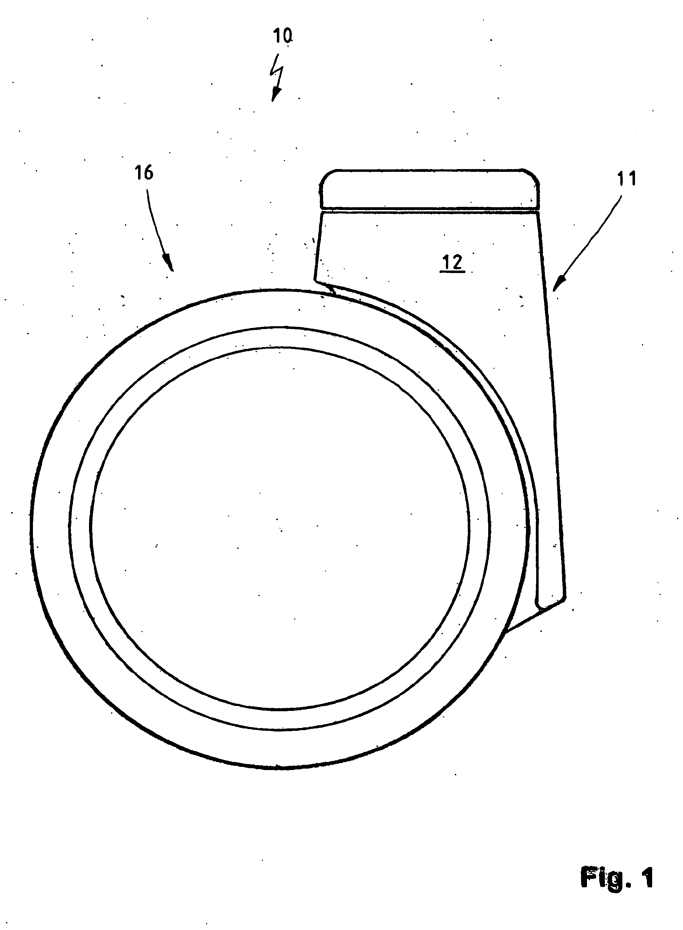

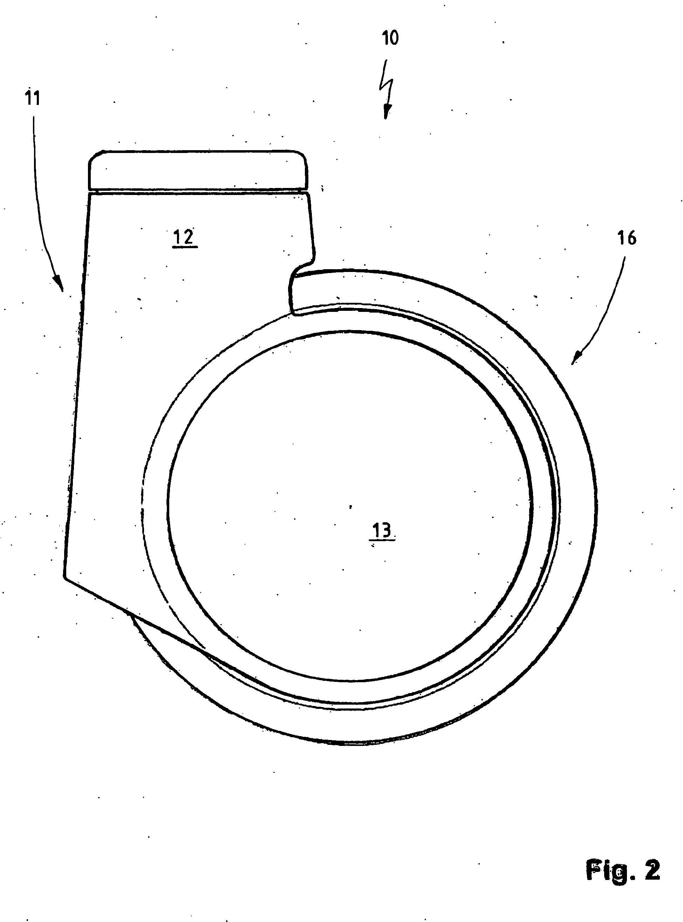

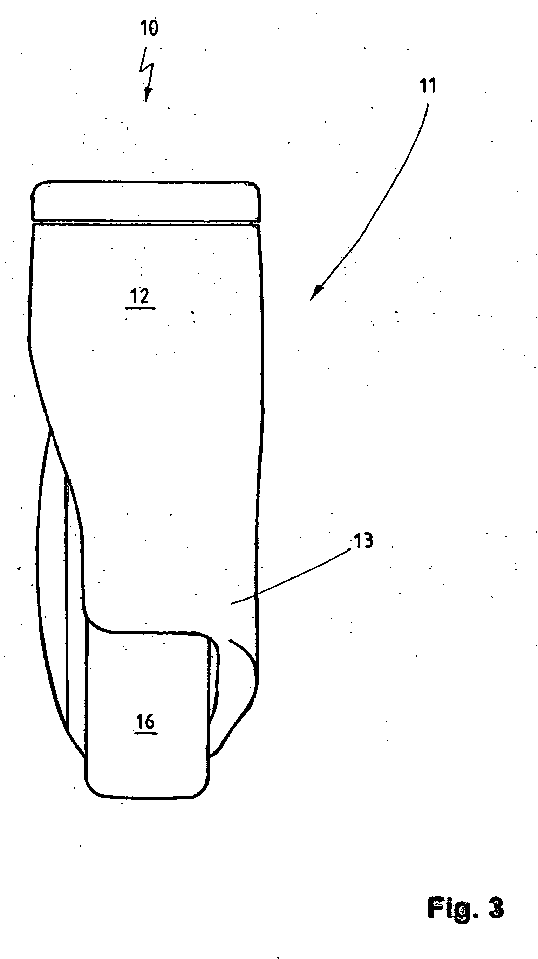

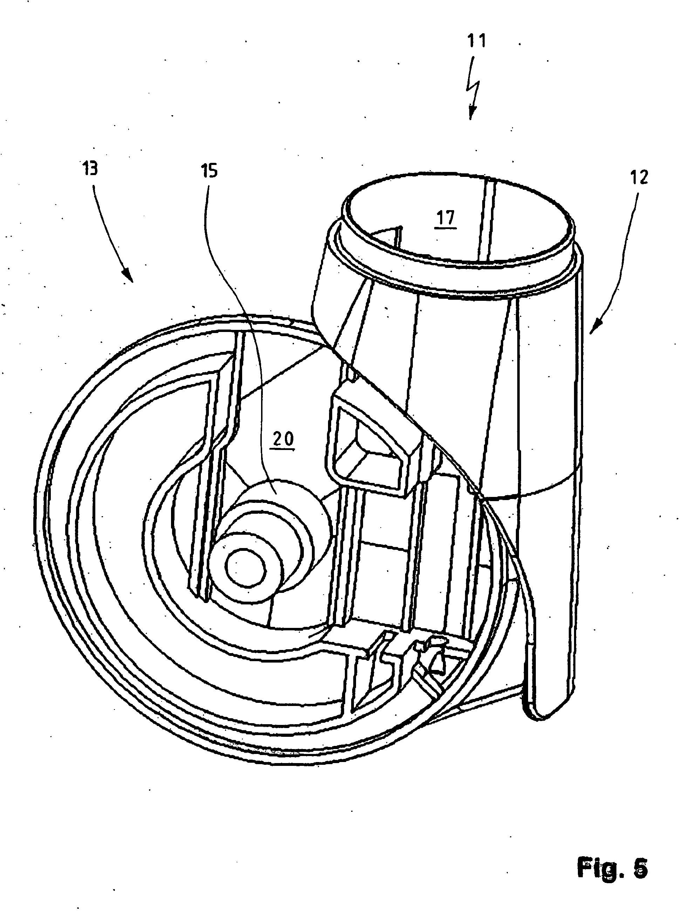

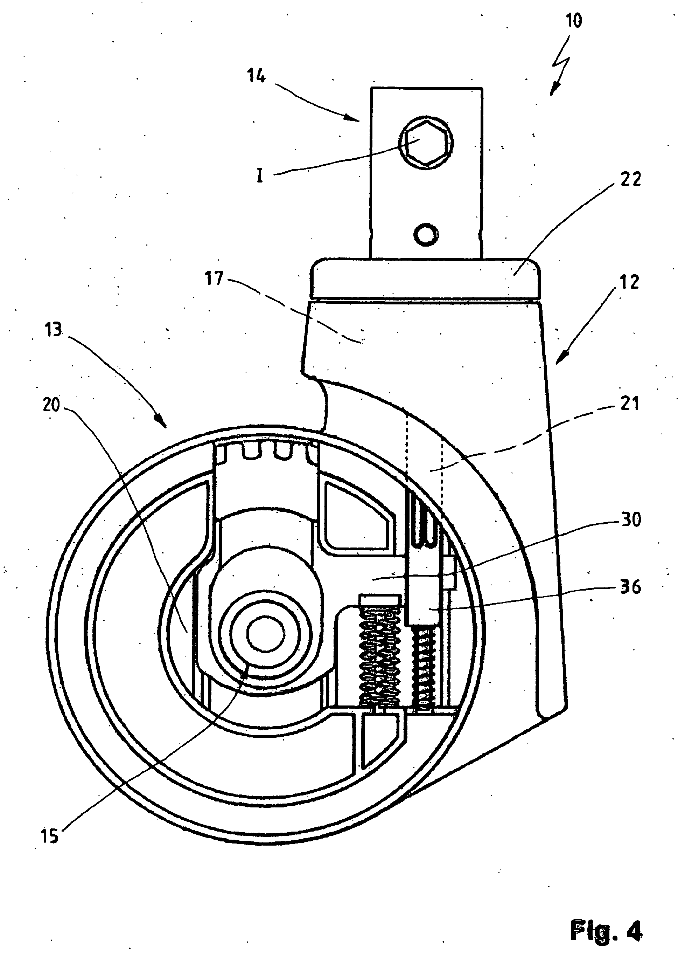

Die Einradrolle 10 weist gemäß den Fig. 1 bis 4 ein Tragteil 11 auf, welches aus einem Kopfteil 12 und einem Fußteil 13 gebildet wird. Das Kopfteil 12 lagert zumindest einen Rückenbolzen 14 (s. Fig. 5), der zur Befestigung der Einradrolle 10 beispielsweise an einem Krankenhausbett oder dergleichen dient. Das Fußteil 13 weist darüber hinaus eine Nabe 15 zur Drehlagerung eines Laufrades 16 auf.

Wie insbesondere aus den Fig. 5 ff. ersichtlich, handelt es sich bei dem Tragteil 11 um ein einstückig stoffschlüssiges Kunststoffspritzgussteil, welches im Bereich des Kopfteiles 12 einerseits einen Hohlraum 17 nicht nur zur Aufnahme des Rückenbolzens 14, sondern auch eines Schwenk- und Richtungsfeststellers 18 eines Totalfeststellers 19 aufweist. Andererseits ist auch das Fußteil 13 mit einem die Nabe 15 umgebenden Hohlraum 20 versehen, der eine Radfeststelleinrichtung 30 aufnimmt, wobei die Hohlräume 17 und 20 mittels eines kanalartigen Funktionsbereiches 21 miteinander verbunden sind.

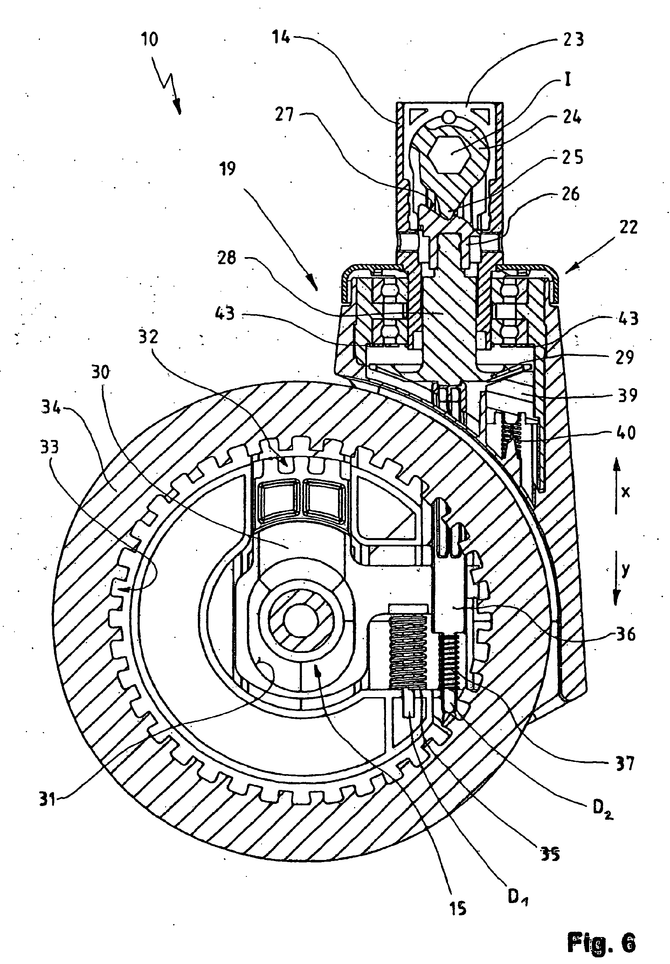

Im Einzelnen ist die Einradrolle 10 in den Fig. 6 bis 8 dargestellt.

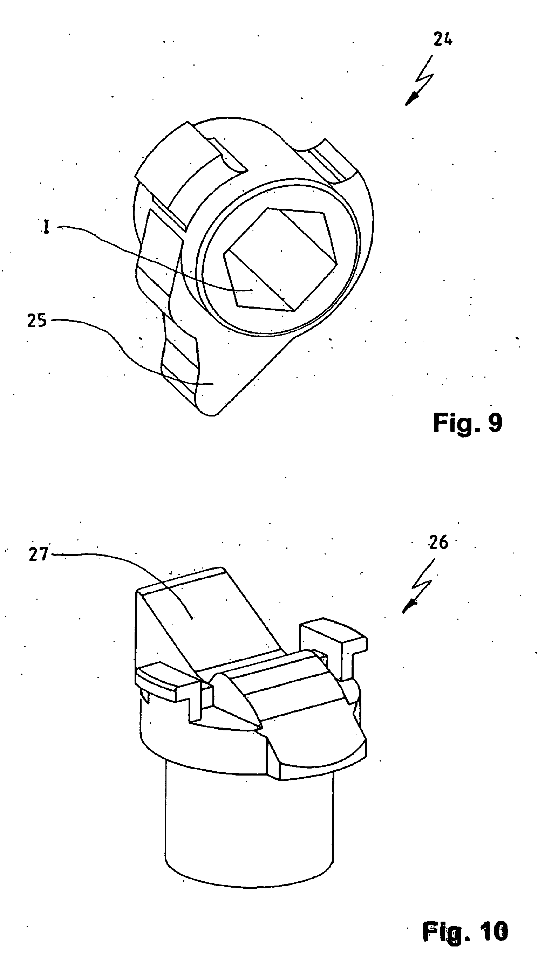

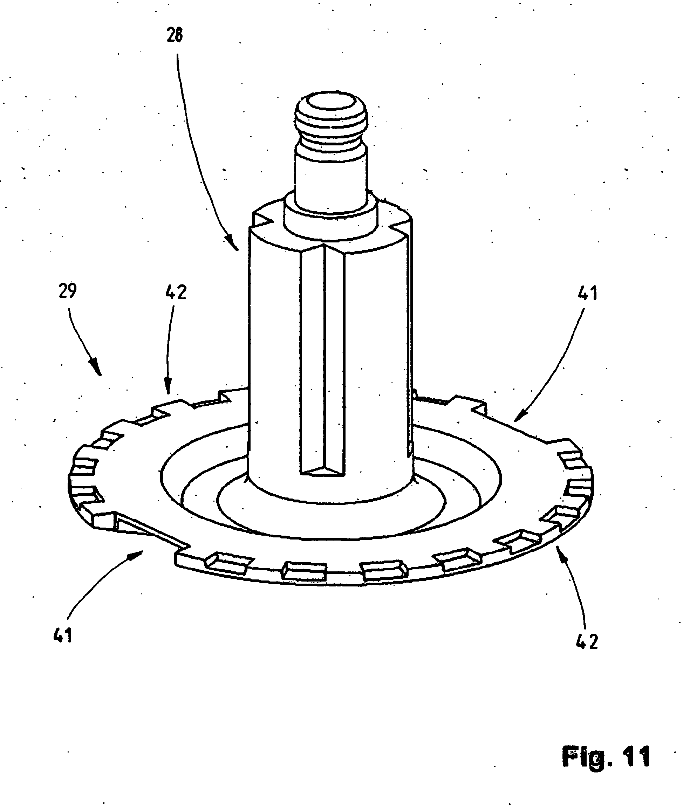

Der im Kopfteil 12 mittels eines Drehlagers 22 am Tragteil 11 angeordnete Rückenbolzen 14 der Einradrolle 10 weist eine Lagerschale 23 auf, in der ein Betätigungsexzenter 24 angeordnet ist, der mit einem Innensechskant (I) für ein nicht dargestelltes Betätigungselement versehen ist. Der Betätigungsexzenter 24 weist einen Betätigungsvorsprung 25 auf, der auf einen Schaltkopf 26 einwirkt, welcher mit einer Schaltkurve 27 versehen ist, die drei Schaltpositionen aufweist (s. auch Fig. 9 und 10). Der Schaltkopf 26 sitzt auf einem Schaltbolzen 28, der mit einem tellerartigen Richtungs-/Schwenkfeststeller 29 versehen ist (s. auch Fig. 11).

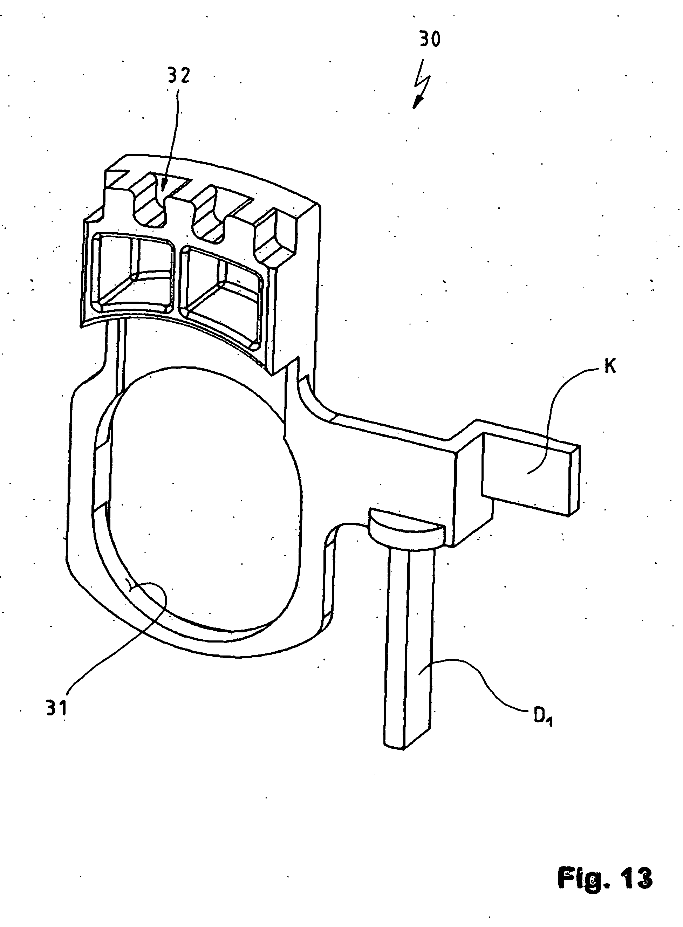

Im Hohlraum 20 des Fußteils 13 ist die Radfeststelleinrichtung 30 so angeordnet, dass sie die Nabe 15 im Bereich eines Langloches 31 umgreift. Die Radfeststelleinrichtung 30 weist eine Außenverzahnung 32 auf, die blockierend in eine Innenverzahnung 33 eines Radkörpers 34 eingreifen kann. Letztlich ist die Radfeststelleinrichtung 30 mit einer Druckfeder 35 versehen, die auf einem Befestigungsdorn D₁ angeordnet ist und die Radfeststelleinrichtung 30 in x-Richtung belastet (s. auch Fig. 13).

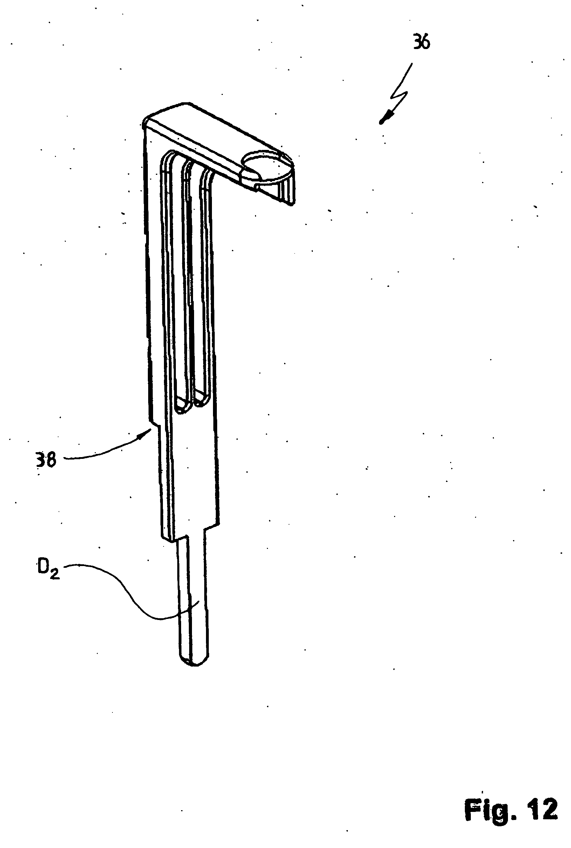

Die Verbindung zwischen dem Schaltbolzen 28 und der Radfeststelleinrichtung 30 erfolgt über ein Betätigungsgestänge 36 (s. auch Fig. 12), welches in dem kanalartigen Funktionsbereich 21 angeordnet ist und ebenfalls über eine Feder 37 in x-Richtung belastet ist, die von einem Befestigungsdorn D₂ gehalten ist. Die Betätigungsstange 36 weist einen Betätigungsvorsprung 38 auf, der mit einem Kragen K der Radfeststelleinrichtung 30 so zusammenwirkt, dass letztere entgegen der Kräfte der Federn 35 und 37 in y-Richtung bewegt werden kann.

Letztlich ist unterhalb des tellerartigen Richtungs-/Schwenkfeststellers 29 ein als Richtungsfeststeller ausgebildeter Rasthebel 39 angeordnet, der durch eine zwischen Tragteil 11 und Rasthebel 39 fixierte Feder 40 ebenfalls in x-Richtung mit einer Federkraft beaufschlagt ist.

In den Fig. 6, 7 und 8 sind die verschiedenen Stellungen des Totalfeststellers 19 zu erkennen.

In der Fig. 6 befindet sich der Betätigungsvorsprung 25 des Betätigungsexzenters 24 in der mittleren Schaltposition. Dies führt dazu, dass über den Schaltkopf 26 bzw. die Schaltkurve 27 der Schaltbolzen 28, die Betätigungsstange 37 sowie auch die Radfeststelleinrichtung 30 sich in einer neutralen Position befinden, bei der alle Teile des Totalfeststellers 19 nicht im Eingriff sind.

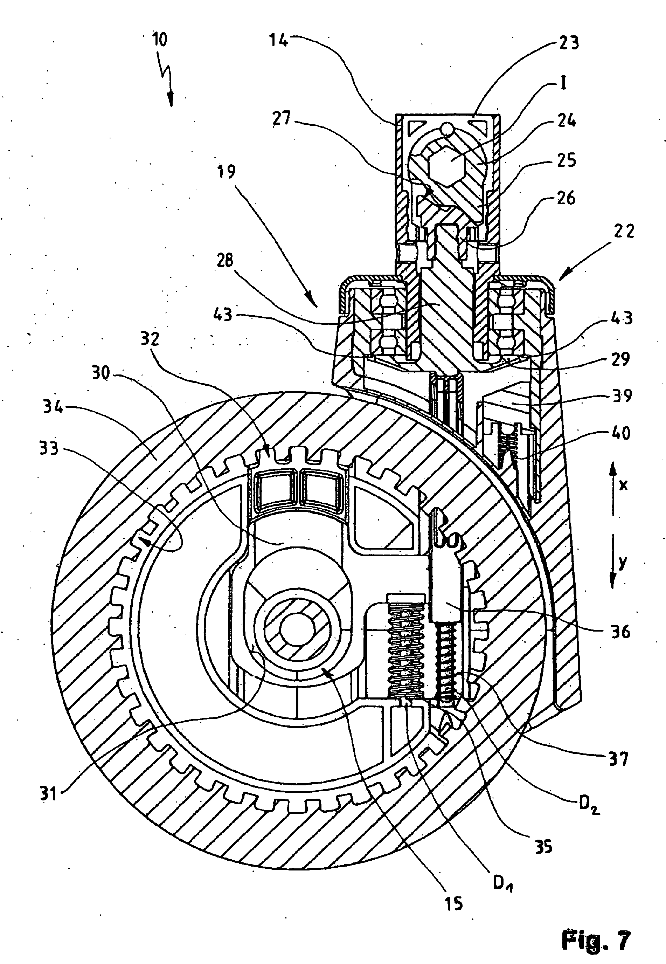

Dagegen zeigt die Fig. 7, dass der Betätigungsvorsprung 25 die linke Position der Schaltkurve 27 beaufschlagt. In dieser Schaltposition findet eine Richtungsfeststellung der Einradrolle 10 dadurch statt, dass der Richtungsfeststeller 39 in eine der beiden gegenüberliegenden Ausnehmungen 41 des tellerartigen Teiles 29 des Schaltbolzens 28 eingreift.

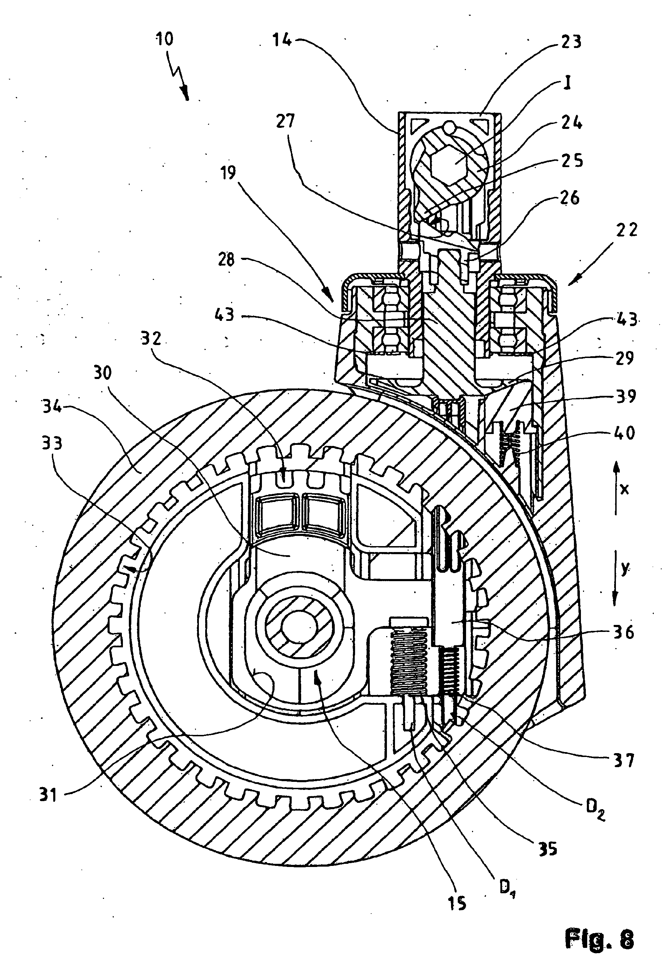

Letztlich zeigt die Fig. 8 die so genannte Totalfeststellung. Hierbei befindet sich der Betätigungsvorsprung 25 in der rechten Position, wodurch sich der Schaltbolzen 28, die Betätigungsstange 37 und letztlich auch die Radfeststelleinrichtung 30 durch Einwirkung der Federn 35 und 37 in x-Richtung bewegen. Hierdurch kommt die Außenverzahnung 32 der Radfeststelleinrichtung 30 in Eingriff mit der Innenverzahnung 31 des Radkörpers 34, wodurch das Laufrad 16 formschlüssig blockiert wird. Zugleich greift eine am tellerartigen Teil 29 vorhandene Verzahnung 42 in eine unterhalb des Drehlagers 22 angeordnete Gegenverzahnung 43 ein, so dass die Einradrolle 10 zugleich schwenkblockiert wird.

## Patentansprüche

1. Einradrolle, insbesondere für Krankenhausbetten, mit einem ein Kopfteil und ein einschenkliges Fußteil aufweisendes Tragteil, dessen Kopfteil zumindest einen Rückenbolzen und dessen Fußteil zumindest eine Nabe für ein Rad aufnimmt, **dadurch gekennzeichnet, dass** das Fußteil (13) einen Hohlraum (20) aufweist, der mit Ausnahme eines Bewegungsspaltes vom Radkörper (34) abgedeckt wird, und dass der Hohlraum (20) über einen innenliegenden Funktionsbereich (21) mit dem Kopfteil (12) räumlich verbunden ist.

2. Einradrolle nach Anspruch 1, **dadurch gekennzeichnet, dass** der innenliegende Funktionsbereich (21) kanalartig ausgebildet ist.

3. Einradrolle nach Anspruch 2, **dadurch gekennzeichnet, dass** im Fußteil (13) eine Radfeststelleinrichtung (30) angeordnet ist, welche über eine im innenliegenden Funktionskanal (21) angeordnete Betätigungsstange (36) mit dem Betätigungsexzenter (24) im Kopfteil (12) mittelbar wirkverbunden ist.

4. Einradrolle nach Anspruch 2, **dadurch gekennzeichnet, dass** die Radfeststelleinrichtung (30) formschlüssig auf den Radkörper (34) einwirkt.

5. Tragteil für eine Einradrolle gemäß Anspruch 1, insbesondere für Krankenhausbetten, mit einem Kopfteil und einem einschenkligen Fußteil, wobei das Kopfteil zumindest einen Rückenbolzen und das Fußteil zumindest eine Nabe für ein Rad aufnimmt, **dadurch gekennzeichnet, dass** das aus Kopfteil (12) und Fußteil (13) gebildete Tragteil (11) einen gemeinsamen, mit Ausnahme des zwischen dem Fußteil (13) und dem Radkörper (34) angeordneten Bewegungsspalt abgeschlossenen Hohlraum (17, 20, 21) aufweist und dass der im Fußteil (13) angeordnete, zumindest teilweise die Nabe (15) umgebende Hohlraum (20) über einen innenliegenden Funktionsbereich (21) mit dem Kopfteil (12) verbunden ist.

6. Tragteil nach Anspruch 5, **dadurch gekennzeichnet, dass** der Funktionsbereich (21) kanalartig ausgebildet ist.

7. Tragteil nach einem der Ansprüche 4 bis 6, **dadurch gekennzeichnet, dass** das Tragteil (11) aus einem einstückig stoffschlüssig ausgebildeten Kunststoffgehäuse besteht.

## Claims

1. Single-wheel castor, in particular for hospital beds, having a bearing part, which comprises a top part and a single-limbed bottom part and of which the top part receives at least one back bolt and the bottom part receives at least one hub for a wheel, **characterized in that** the bottom part (13) has a hollow space (20), which with the exception of a motion gap is covered by the wheel body (34), and that the hollow space (20) is spatially connected by an inner functional region (21) to the top part (12).

2. Single-wheel castor according to claim 1, **characterized in that** the inner functional region (21) is of a channel-like configuration.

3. Single-wheel castor according to claim 2, **characterized in that** disposed in the bottom part (13) is a wheel-locking device (30), which is indirectly workingly connected to the actuating eccentric(24) in the top part (12) by an actuating rod (36) disposed in the inner functional channel (21).

4. Single-wheel castor according to claim 2, **characterized in that** the wheel-locking device (30) acts positively upon the wheel body (34).

5. Bearing part for a single-wheel castor according to claim 1, in particular for hospital beds, having a top part and a single-limbed bottom part, wherein the top part receives at least one back bolt and the bottom part receives at least one hub for a wheel, **characterized in that** the bearing part (11) formed by top part (12) and bottom part (13) comprises a common hollow space (17, 20, 21), which with the exception of the motion gap disposed between the bottom part (13) and the wheel body (34) is closed, and that the hollow space (20), which is disposed in the bottom part (13) and at least partially surrounds the hub (15), is connected by an inner functional region (21) to the top part (12).

6. Bearing part according to claim 5, **characterized in that** the functional region (21) is of a channel-like configuration.

7. Bearing part according to one of claims 4 to 6, **characterized in that** the bearing part (11) consists of an integrally cohesively formed plastic housing.

## Revendications

1. Rouleau à une roue, en particulier pour des lits d'hôpital, avec un élément de support présentant une partie de tête et une partie de pied à une seule branche, dont la partie de tête loge au moins un boulon supérieur et la partie de pied, au moins un moyeu pour une roue, **caractérisé en ce que** la partie de pied (13) présente un espace creux (20) qui est couvert à l'exception d'une fente de déplacement du corps de roue (34), et **en ce que** l'espace creux (20) est relié spatialement avec la partie de tête (12) par le biais d'une zone de fonctionnement (21) placée à l'intérieur.

2. Rouleau à une roue selon la revendication 1, **caractérisé en ce que** la zone de fonctionnement (21) placée à l'intérieur est conçue à la façon d'un canal.

3. Rouleau à une roue selon la revendication 2, **caractérisé en ce qu'**il est disposé dans la partie de pied (13) un dispositif d'immobilisation de roue (30), lequel est relié fonctionnellement dans la partie de tête (12) directement à l'excentrique d'actionnement (24) par le biais d'une tige d'actionnement (36) disposée dans le canal de fonctionnement (21) placé à l'intérieur.

4. Rouleau à une roue selon la revendication 2, **caractérisé en ce que** le dispositif d'immobilisation de roue (30) agit de façon solidaire sur le corps de roue (34).

5. Elément de support pour un rouleau à une roue selon la revendication 1, en particulier pour des lits d'hôpital, avec une partie de tête et une partie de pied à une seule branche, la partie de tête logeant au moins un boulon supérieur et la partie de pied, au moins un moyeu pour une roue, **caractérisé en ce que** l'élément de support (11) formé de la partie de tête (12) et de la partie de pied (13) présente un espace creux (17, 20, 21) commun, obturé, à l'exception de la fente de déplacement disposée entre la partie de pied (13) et le corps de roue (34) et **en ce que** l'espace creux (20) entourant au moins en partie le moyeu (15) et disposé dans la partie de pied (13) est relié à la partie de tête (12) par le biais d'une zone de fonctionnement (21) placée à l'intérieur.

6. Elément de support selon la revendication 5, **caractérisé en ce que** la zone de fonctionnement (21) est conçue à la façon d'un canal.

7. Elément de support selon l'une des revendications 4 à 6, **caractérisé en ce que** l'élément de support (11) est composé d'un boîtier en matière plastique intégralement formé de façon cohérente.
